# EUROPÄISCHE PATENTSCHRIFT

(11) **EP 1 695 790 B1**
(45) Veröffentlichungstag und Bekanntmachung des Hinweises auf die Patenterteilung: **23.02.2011**
(21) Anmeldenummer: 05026534.7
(22) Anmeldetag: 06.12.2005
(51) Int. Cl.: B23P 21/00, B23P 19/00, B23P 19/02, B25J 9/00

(54) **Montageautomation**
Assembling automation
Automatisation d'assemblage

(30) Priorität: 23.02.2005 DE 102005008593
(43) Veröffentlichungstag der Anmeldung: 30.08.2006
(73) Patentinhaber: CLAAS Fertigungstechnik GmbH, 48361 Beelen (DE)
(72) Erfinder: Herrmann, Günter, 33335 Gütersloh (DE)
(74) Vertreter: Ellerbrächter, Dirk

(56) Entgegenhaltungen:
- EP-A1- 1 225 002
- EP-A1- 1 493 529
- DE-A1- 4 305 470
- DE-U1- 29 813 669
- JP-A- 2000 263 350
- JP-A- 2001 062 645
- US-A- 4 523 363

## Beschreibung

Die Erfindung betrifft eine Montageautomation für die Verbindung von Montageelementen mit einem Bauteil nach dem Oberbegriff des Anspruchs 1.

Eine solche Montageautomation ist aus der EP 1 493 529 A1 bekannt.

Insbesondere in der Fahrzeugfertigung sind Montageautomationen seit langem weit verbreitet. In der Regel werden wegen der hohen Stückzahlen Fertigungsroboter wie unter anderem in der EP 1 182 121 beschrieben eingesetzt, die hochflexibel bewegbar sind und auch komplizierte Montagearbeiten und Bauteil- oder Werkzeugbewegungen durchführen können. Derartige Manipulatoren sind häufig in sogenannten Fertigungsstraßen eingesetzt, in denen den Manipulatoren die zu komplettierenden Bauteile, hier Fahrzeuge, auf separaten Fließstrecken zugeführt werden, sodass die Manipulatoren einzig die zu montierenden Bauteile aufnehmen und in das zu komplettierende Fahrzeug montieren. Wegen der komplexen Fertigungsschritte werden die zu komplettierenden Fahrzeuge in separaten Fixiersystemen gehalten, wobei die jeweiligen Fixiersysteme spezifisch an das jeweils zu montierende Produkt angepasst sind und für neue Fahrzeugtypen stets neue Fixiersysteme eingesetzt werden. Dies führt zu erheblichen Kosten bei der Herstellung der Fertigungsanlagen und kann rentabel nur bei hohen Stückzahlen zu montierenden Produkte realisiert werden.

Aus dem Stand der Technik ist es auch bekannt sogenannte Unterbaugruppen wie etwa die in der DE 195 19 303 gezeigten Dreiecklenker für Fahrzeugachsen mittels unter Einsatz von Montagerobotern vorzumontieren. Dabei bezieht sich die Vormontage unter anderem auf das Einsetzen von Lagerbuchsen in die dafür an dem Bauteil vorgesehen Lagerstellen. Auch derartige Systeme sind so strukturiert, dass die Bauteilfixierung in definierten Fixiersystemen erfolgt die an die spezielle Geometrie des jeweiligen Bauteils angepasst ist. Wegen des hohen Spezialisierungsgrades der Fertigungsprozesse im Bereich der Vormontage von Baugruppen sind in der Regel zudem die erforderlichen Montagewerkzeuge in den sogenannten Arbeitsstationen auf die geometrischen Bedingungen des zu montierenden Bauteils abgestimmt angeordnet. Dieser hohe Grad der Anpassung des Montagesystems an die konkrete Geometrie des zu komplettierenden Bauteils hat zur Folge, dass eine Änderung der Geometrie des zu komplettierenden Bauteils stets weitgehenden Austausch des Montagesystems selbst nach sich zieht. Auch in diesem Fall entstehen hohe Kosten für die Bereitstellung der Fertigungsanlagen.

Es ist deshalb Aufgabe der Erfindung, die beschriebenen Nachteile des Standes der Technik zu vermeiden und insbesondere eine kostengünstige Struktur einer Montageautomation vorzuschlagen.

Diese Aufgabe wird erfindungsgemäß durch die kennzeichnenden Merkmale des Anspruchs 1 gelöst.

Indem der Montageträger einer Montageautomation zumindest eine Montageelementaufnahme umfasst und diese Montageelementaufnahme austauschbar an dem Montageträger angeordnet ist wird erreicht, dass bei einer Änderung der Struktur des zu komplettierenden Bauteils nur geringfügige und damit kostengünstig umsetzbare Änderungen an der Montageautomation vorgenommen werden müssen.

In vorteilhafter Weiterbildung der Erfindung ist die Montageelementaufnahme so ausgestaltet, dass sie das Montageelement in der Montageposition lagefixiert. Dadurch wird erreicht, dass die Änderung der Montageposition des Montageelementes oder der Einsatz anderer Montageelemente nur einen Austausch des Montageelementaufnahme nach sich ziehen würde.

Indem dem Montageträger zumindest teilweise eine Bauteilaufnahme zugeordnet ist und die Bauteilaufnahme und/oder der Montageroboter das Bauteil in der Montageposition lagefixiert, wird sichergestellt, dass das Bauteil während des Montageprozesses keiner die Montagegenauigkeit beeinflussende Lageänderung ausgesetzt ist.

Die bei einer Änderung der Struktur des zu komplettierenden Bauteils anfallenden Änderungen an der Montageautomation werden sich dann weiter verringern lassen, wenn sowohl die Montageelementaufnahme als auch die Bauteilaufnahme austauschbar an dem Montageträger angeordnet sind

Um den Einfluss von Lagetoleranzen und damit zusammenhängenden Montageungenauigkeiten zwischen der Position des zu komplettierenden Bauteils und den Positionen der zu montierenden Montageelemente zu reduzieren, können in vorteilhafter Weiterbildung der Erfindung die Montageelementaufnahme und die Bauteilaufnahme einstückig ausgebildet sein und eine Fixiereinrichtung bilden und wobei die Fixiereinrichtung austauschbar in den Montageträger integriert ist

Die Flexibilität der erfindungsgemäßen Montageautomation wird dann erheblich gesteigert, wenn der Montageträger in eine Arbeitsstation und in den Wirkbereich zumindest eines in der Arbeitsstation angeordneten Montagewerkzeugs bewegbar ist. Dies ermöglicht den Einsatz einfach strukturierter und damit kostengünstig herstellbarer Montageträger, das die erforderlichen Werkzeughalterungen an separaten Tragelementen angeordnet sind.

Um die Effizienz einer solchen Montageautomation zu erhöhen, können in vorteilhafter Weiterbildung der Erfindung ein oder mehrere Montageträger in ein umlaufendes Montagekarussell integriert sein und über Tragarme radial verschiebbar und/oder um die Tragarmachse des Montageträgers drehbar in dem Montagekarussell geführt werden. Dies hat einerseits den Vorteil, dass eine Vielzahl von Montageträgern von einem einzigen Montageroboter bestückt werden können. Andererseits kann der Montageträger sehr flexibel im Bereich der Montagewerkzeuge bewegt werden, sodass bei der Abarbeitung einer Vielzahl von Montagegängen ein häufiges Umspannen des Bauteils in dem Montageträger vermieden werden kann.

Eine große Varianz der von dem Bauteil einnehmbaren Montagepositionen wird auch dann sichergestellt, wenn die Änderung der Lage des Bauteils durch Lageänderung des jeweiligen Montageträgers und/oder durch Umsetzung des Bauteils mittels des Montageroboters in dem jeweiligen Montageträger erfolgt.

In analoger Weise wird die Effizienz der Montageautomation auch dadurch noch erhöht, wenn ein oder mehrere Montagekarussells einem Montageroboter zugeordnet sind und der Montageroboter den Montageträgern die Bauteile zuführt.

In vorteilhafter Weiterbildung der Erfindung kann das wenigstens eine Montagewerkzeug als Einpressspindel ausgeführt sein, sodass die Montageautomation ein effizientes und kostengünstiges Einpressen von Montageelementen in Bauteile sicherstellt.

Eine weitere vorteilhafte Ausgestaltung der Erfindung wird dann erreicht, wenn dem Montageträger in einer Arbeitsstation eine Vielzahl von Montagewerkzeugen zugeordnet sind. Auf diese Weise reduziert sich die für Lageänderung des Bauteils erforderliche Zeit erheblich, da sich so die Anzahl der Lageänderungen erheblich reduzieren oder ganz vermeiden lässt.

In vorteilhafter Weiterbüdung der Erfindung ist die Montageautomation auf das Einbringen von Lagerbuchsen in Bauteile spezialisiert, wobei die Lagerbuchsen von beliebiger Gestalt, wie etwa Gelenklagerbuchsen und/oder Gummilagerbuchsen sein können und die Bauteil vorzugsweise als Achsträger von Fahrzeugachsen ausgeführt sind.

Weitere vorteilhafte Ausgestaltungen sind Gegenstand weiterer Unteransprüche und werden nachfolgend an Hand eines in mehreren Figuren dargestellten Ausführungsbeispiels beschrieben. Es zeigen:
- Figur 1: eine schematische Darstellung der erfindungsgemäßen Automation
- Figur 2: eine Detaildarstellung der erfindungsgemäßen Automation nach Figur 1

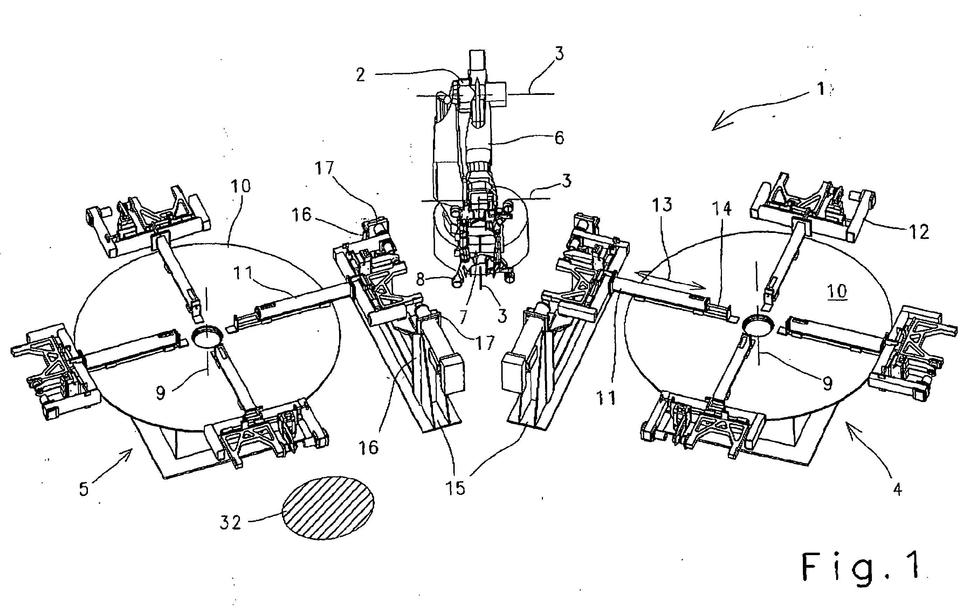

Figur 1 zeigt eine schematische Draufsicht auf die erfindungsgemäße Montageautomation 1. In dem dargestellten Ausführungsbeispiel arbeitet ein in mehreren Schwenk- und Drehachsen 3 bewegbarer Montageroboter (Manipulator) 2 mit zwei sogenannten Montagekarussells 4, 5 zusammen. Frontseitig nimmt der bewegliche Arme 6 des Montageroboters 2 einen Adapter 7 auf, mittels dessen ein Bauteil 8 von dem Montageroboter 2 im Raum in noch näher zu beschreibender Weise bewegt werden kann.

Jedes der Montagekarussells 4, 5 kann um vertikale Achsen 9 drehbeweglich geführt werden. Einer beliebig gestalteten Tragkonstruktion 10 sind jeweils gleichbeabstandet zueinander vier Tragarme 11 zugeordnet, die in ihren radial außen liegenden Bereichen je einen erfindungsgemäßen Montageträger 12 aufnehmen. Die Tragarme 11 sind zudem so an der Tragkonstruktion 10 angeordnet, dass sie in radialer Richtung 13 verschoben und gegebenenfalls um die Längsachse 14 des jeweiligen Tragarms 11 verdreht werden können. Auf diese Weise können die Montageträger 12 mit einer großen Zahl an Freiheitsgraden im Raum bewegt werden. Im Bereich des Montageroboters 2 sind den Montagekarussells 4, 5 auf dem Boden fixierte Arbeitsstationen 15 zugeordnet, die jeweils einander gegenüberliegende Stützträger 16 umfassen. Die Stützträger 16 nehmen obenseitig Lagerflansche 17 auf, wobei jeweils die Lagerflansche 17 einer Arbeitsstation 15 zueinander fluchtend angeordnet sind.

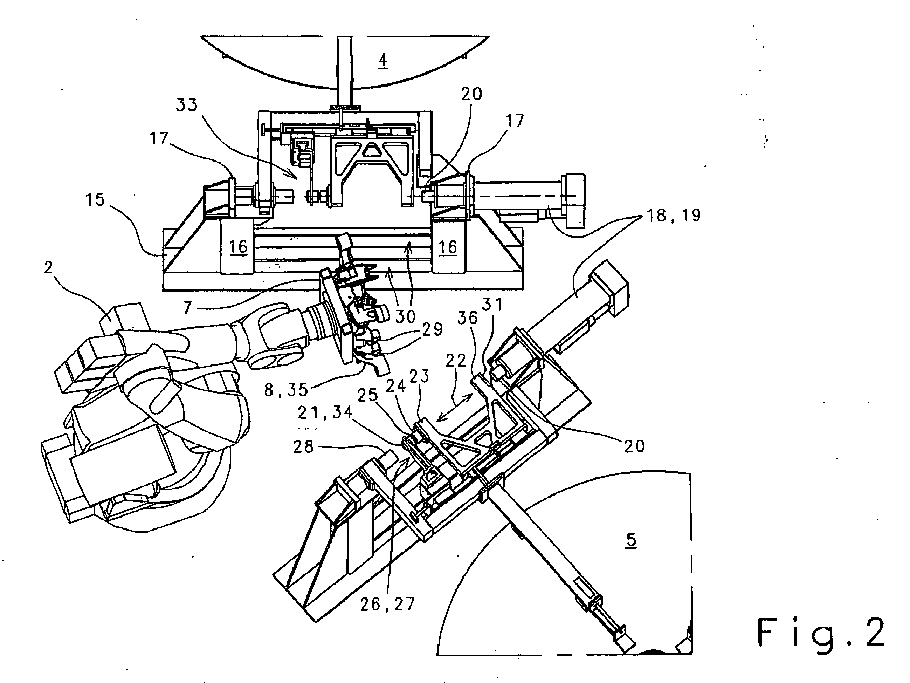

Gemäß Figur 2 wird zumindest einer der Lagerflansche 17 von einem in der Arbeitsstadion 15 abgestützten und als Einpressspindel 19 ausgeführten Montagewerkzeug 18 durchsetzt. Frontseitig verfügt das Montagewerkzeug 18 über einen Einpressstempel 20, dessen axiale Bewegung das noch näher zu beschreibende Einpressen von Montageelementen 21 in Bauteile 8 vornimmt. In dem dargestellten Ausführungsbeispiel nimmt der Montageträger 12 in Bewegungsrichtung 22 des jeweiligen Einpressstempels 20 verschiebbar einen Zwischenrahmen 23 auf. Dem Zwischenrahmen 23 ist in seinem der Einpressspindel 19 abgewandten Bereich ebenfalls ein Einpressstempel 24 zugeordnet, dessen Kontaktfläche 25 die Position eines in einer Montageelementaufnahme 26 fixierten Montageelementes 21 überdeckt. Die Montageelementaufnahme 26 ist im einfachsten Fall als Greiffinger 27 ausgeführt und in erfindungsgemäßer Weise austauschbar an dem Montageträger 12 angeordnet. Dies ermöglicht, dass die Montagelementaufnahme 26 in Abhängigkeit von der Gestalt des Montageelementes 21 und damit verbunden von der Gestalt des zu montierenden Bauteils 8 austauschbar ist, ohne dass dies auch den Austausch weiterer Elemente der Montageautomation 1 erfordern würde. In dem weiteren Lagerflansch 17 der Arbeitsstation 15 ist im Bereich der Position des Montageelementes 21 ein Gegenhalter 28 angeordnet, der die zum Einpressen der Montageelemente 21 in das jeweilige Bauteil 8 erforderlichen Presskräfte über den jeweiligen Stützträger 16 der Arbeitsstation 15 gegen den Boden abstützt.

Im dargestellten Ausführungsbeispiel bewegt der Montageroboter 2 das an seinem Adapter 7 fixierte Bauteil 21 so in die entsprechende Arbeitsstadion 15, dass der jeweilige Lagersitz 29 eine Lage im Bereich zwischen der Position des in der Montageelementaufnahme 26 und dem dazu fluchtenden Gegenhalter 28. In dieser Position wird das Bauteil 8 sowohl von dem Gegenhalter 28 als auch von Anschlagelementen 30 der jeweiligen Arbeitsstadion 15 abgestützt Der Einpressvorgang des Montageelementes 21 in den Lagersitz 29 des jeweiligen Bauteils 8 wird dadurch realisiert, dass der Einpressstempel 20 gegen eine Kontaktfläche 31 des Zwischenrahmens 23 bewegt wird, sodass der Zwischenrahmen 23 in Richtung der Montageelementaufnahme 26 verschoben wird und der Einpressstempel 24 des Zwischenrahmens 23 das Montageelement 21 in den Lagersitz 29 des Bauteils 8 in Richtung des Gegenhalters 28 einpresst. Nach erfolgter Montage des Montageelementes 21 wird das Bauteil 8 von dem Montageroboter 2 aus der jeweiligen Arbeitsstadion 15 herausbewegt und in nicht dargestellter, an sich bekannter Weise weiteren Produktionsabläufen zugeführt. Der Montageroboter 2 ist zugleich in der Lage, dass Bauteil 8 in verschiedenen Position in der jeweiligen Arbeitsstadion 15 zu positionieren, sodass von dem Montagewerkzeug 18 in ein und dasselbe Bauteil 8 eine Vielzahl von Montageelementen 21 eingebracht werden können. In diesem Zusammenhang sind verschiedenste Arbeitsabläufe denkbar. So könnte in einer ersten Ausgestaltung der Erfindung die Einbringung mehrerer Montageelemente 21 in ein und dasselbe Bauteil 8 so organisiert sein, dass die Montageelementaufnahmen 26 der verschiedenen Montageträger 12 in einem beliebigen Bereich 32 zunächst mit Montageelementen 21 bestückt werden und sodann der jeweilige Montageträger 12 in den Arbeitsbereich des Montageroboters 2 bewegt wird. Der Montageroboter 2 würde dann das Bauteil 8 in der bereits beschriebenen Weise wieder in die jeweilige Arbeitsstadion 15 einsetzen und der Einpressprozess beginnt von neuem. Ist der Montageprozess eines Bauteils 8 abgeschlossen nimmt der Montageroboter 2 nach Ablage oder Weitergabe des montierten Bauteils 8 ein neues Bauteil 8 auf und der beschriebene Montageprozess wiederholt sich nunmehr an dem weiteren Montagekarussell 4,5, wobei der Montageroboter 2 die Montagekarussells 4, 5 wechselweise mit Bauteilen 8 bestückt, sodass während der Montageroboter 2 ein Bauteil 8 in einem der Montagekarussells 4, 5 zur Komplettierung lagefixiert das anderer Montagekarussell 4, 5 zugleich mit neuen Montageelementen 21 bestückt wird. Auf diese Weise lässt sich die erforderliche Montagezeit erheblich minimieren, da die Bestückung der Montageelementaufnahmen 26 so organisiert werden kann, dass eine Verzögerung im Montageprozess wegen des Auffüll- oder Nachladeprozesses vermieden wird.

In vorteilhafter Weiterbildung der Erfindung kann beispielsweise der Zwischenrahmen 23 in Verbindung mit den Anschlagelementen 30 als Bauteilaufnahme 36 ausgebildet sein, sodass der Montageroboter 2 während des einen Montageprozesses ein weiteres Bauteil 8 einem anderen Montagekarussell 4, 5 zuführen kann. Für diesen Fall könnten die Bauteilaufnahme 36 und die Montageelementaufnahme 26 einstückig ausgeführt sein, sodass die Bauteilaufnahme 36 und die Montageelementaufnahme 26 eine Fixiereinrichtung 33 bilden, die in erfindungsgemäßer Weise austauschbar an dem Montageträger 12 angeordnet ist.

Weiter können den Arbeitsstationen 15 in nicht dargestellter Weise eine Vielzahl von Montagewerkzeugen 18 zugeordnet sein, sodass in einem einzigen Arbeitsschritt eine Vielzahl von Montageelementen 21 in das jeweilige Bauteil 8 montierbar sind. Während die Erfindung in dem dargestellten Ausführungsbeispiel an Hand des Einpressens von als Lagerbuchsen 34 ausgeführten Montageelementen 21 in Bauteile 8 beschrieben wird, liegt es im Rahmen der Erfindung, dass die Montageelemente 21 neben vielfältig gestalteten Lagern, Gelenklagerbuchsen oder Gummilagerbuchsen auch die Montage beliebiger Montageelemente 21, die zu ihrer Montage einer Montageelementaufnahme 26 bedürfen, umfassen kann. Denkbar wäre in diesem Zusammenhang beispielsweise die Einbringung von Bolzen oder das Anbringen von Schraubverbindungen. Mithin ist die Erfindung auch nicht auf als Einpressspindel 20 ausgeführte Montagewerkzeuge 18 beschränkt, sondern die Montagewerkzeuge 18 können je nach durchzuführendem Montagevorgang beliebig ausgeführt sein.

Ein bevorzugter Anwendungsfall für die Erfindung ergibt sich bei der Montage von Lagerbuchsen 34 in Achsträger 35 von Fahrzeugachsen.

### Bezugszeichenliste:

- 1: Montageautomation
- 2: Montageroboter
- 3: Schwenk- und Drehachsen
- 4,5: Montagekarussell
- 6: Arm
- 7: Adapter
- 8: Bauteil
- 9: vertikale Achse
- 10: Tragkonstruktion
- 11: Tragarm
- 12: Montageträger
- 13: radiale Richtung
- 14: Längsachse
- 15: Arbeitsstadion
- 16: Stützträger
- 17: Lagerflansch
- 18: Montagewerkzeug
- 19: Einpressspindel
- 20: Einpressstempel
- 21: Montageelement
- 22: Bewegungsrichtung
- 23: Zwischenrahmen
- 24: Einpressstempel
- 25: Kontaktfläche
- 26: Montagelementaufnahme
- 27: Greiffinger
- 28: Gegenhalter
- 29: Lagersitz
- 30: Anschlagelement
- 31: Kontaktfläche
- 32: beliebiger Bereich
- 33: Fixiereinrichtung

- 34: Lagerbuchse
- 35: Achsträger
- 36: Bauteilaufnahme

## Patentansprüche

1. Montageautomation für die Verbindung von Montageelementen (21) mit einem Bauteil (8) wobei das Bauteil (8) von einem Montageroboter (2) in den Wirkbereich eines Montageträgers (12) bringbar ist, der das Bauteil (8) in zumindest einer Montageposition im Wirkbereich eines Montagewerkzeugs (18) lagefixiert,
**dadurch gekennzeichnet,**
**dass** der Montageträger (12) zumindest eine Montageelementaufnahme (26) umfasst und die Montageelementaufnahme (26) austauschbar an dem Montageträger (12) angeordnet ist.

2. Montageautomation für die Verbindung von Montageelementen mit einem Bauteil nach Anspruch 1,
**dadurch gekennzeichnet,**
**dass** die Montageelementaufnahme (26) das Montageelement (21) in der Montageposition lagefixiert.

3. Montageautomation für die Verbindung von Montageelementen mit einem Bauteil nach einem der vorhergehenden Ansprüche,
**dadurch gekennzeichnet,**
**dass** dem Montageträger zumindest teilweise eine Bauteilaufnahme (23, 30, 36) zugeordnet ist und die Bauteilaufnahme (23, 30, 36) und/oder der Montageroboter (2, 7) das Bauteil (8) in der Montageposition lagefixiert.

4. Montageautomation für die Verbindung von Montageelementen mit einem Bauteil nach Anspruch 3,
**dadurch gekennzeichnet,**
**dass** die Bauteilaufnahme (23, 30, 36) und die Montageelementaufnahme (26) austauschbar an dem Montageträger (12) angeordnet sind.

5. Montageautomation für die Verbindung von Montageelementen mit einem Bauteil nach einem der Ansprüche 3 oder 4,
**dadurch gekennzeichnet,**
**dass** die Montageelementaufnahme (26) und die Bauteilaufnahme (36) einstückig ausgebildet sind und eine Fixiereinrichtung (33) bilden und wobei die Fixiereinrichtung (33) austauschbar in den Montageträger (12) integriert ist.

6. Montageautomation für die Verbindung von Montageelementen mit einem Bauteil nach einem der vorhergehenden Ansprüche,
**dadurch gekennzeichnet,**
**dass** der Montageträger (12) in eine Arbeitsstadion (15) und in den Wirkbereich zumindest eines in der Arbeitsstadion (15) angeordneten Montagewerkzeugs (18) bewegbar ist.

7. Montageautomation für die Verbindung von Montageelementen mit einem Bauteil nach einem der vorhergehenden Ansprüche,
**dadurch gekennzeichnet,**
**dass** ein oder mehrere Montageträger (12) in ein umlaufendes Montagekarussell (4, 5) integriert sind und Ober Tragarme (11) radial verschiebbar und/oder um die Längsachse (14) der Tragarme (11) drehbar in dem Montagekarussell (4, 5) geführt werden.

8. Montageautomation für die Verbindung von Montageelementen mit einem Bauteil nach einem der vorhergehenden Ansprüche,
**dadurch gekennzeichnet,**
**dass** die Lage des Bauteils (8) zu dem wenigstens einen Montagewerkzeug (18) änderbar ist und die Änderung der Lage des Bauteils (18) durch Lageänderung des jeweiligen Montageträgers (12) und/oder durch Umsetzung des Bauteils (8) mittels des Montageroboters (2) in dem jeweiligen Montageträger (12) erfolgt.

9. Montageautomation für die Verbindung von Montageelementen mit einem Bauteil nach einem der vorhergehenden Ansprüche,
**dadurch gekennzeichnet,**
**dass** ein oder mehrere Montagekarussells (4, 5) einem Montageroboter (2) zugeordnet sind und der Montageroboter (2) den Montageträgem (12) die Bauteile (8) zuführt.

10. Montageautomation für die Verbindung von Montageelementen mit einem Bauteil nach einem der vorhergehenden Ansprüche,
**dadurch gekennzeichnet,**
**dass** das wenigstens eine Montagewerkzeug (18) als Einpressspindel (19) ausgeführt ist.

11. Montageautomation für die Verbindung von Montageelementen nach einem der vorhergehenden Ansprüche,
**dadurch gekennzeichnet,**
**dass** dem Montageträger (12) in einer Arbeitsstadion (15) eine Vielzahl von Montagewerkzeugen (18) zugeordnet sind.

12. Montageautomation für die Verbindung von Montageelementen mit einem Bauteil nach einem der vorhergehenden Anspruch,
**dadurch gekennzeichnet,**
**dass** die Montageelemente (21) als Lagerbuchsen (34) ausgeführt sind.

13. Montageautomation für die Verbindung von Montageelementen mit einem Bauteil nach Anspruch 12,
**dadurch gekennzeichnet,**
**dass** die Lagerbuchsen (34) als Gelenklagerbuchsen und/oder Gummilagerbuchsen ausgebildet sind.

14. Montageautomation für die Verbindung von Montageelementen mit einem Bauteil nach einem der vorhergehenden Ansprüche,
**dadurch gekennzeichnet,**
**dass** das zumindest ein Montageelement (21) aufnehmende Bauteil (8) als Achsträger (35) für Fahrzeugachsen ausgebildet ist.

## Claims

1. Assembly automation for connecting assembly elements (21) to a component (8), wherein the component (8) can be brought by an assembly robot (2) into the operative region of an assembly carrier (12) which fixes the component (8) in position in at least one assembly position in the operative region of an assembly tool (18),
**characterised in that**
the assembly carrier (12) includes at least one assembly element receiving means (26) and the assembly element receiving means (26) is arranged replaceably on the assembly carrier (12).

2. Assembly automation for connecting assembly elements to a component according to claim 1 **characterised in that** the assembly element receiving means (26) fixes the assembly element (21) in the assembly position.

3. Assembly automation for connecting assembly elements to a component according to one of the preceding claims **characterised in that** a component receiving means (23, 30, 36) is at least partially associated with the assembly carrier and the component receiving means (23, 30, 36) and/or the assembly robot (2, 7) fixes the component (8) in the assembly position.

4. Assembly automation for connecting assembly elements to a component according to claim 3 **characterised in that** the component receiving means (23, 30, 36) and the assembly element receiving means (26) are arranged replaceably on the assembly carrier (12).

5. Assembly automation for connecting assembly elements to a component according to claim 3 or claim 4 **characterised in that** the assembly element receiving means (26) and the component receiving means (36) are in one piece and form a fixing device (33) and wherein the fixing device (33) is integrated replaceably in the assembly carrier (12).

6. Assembly automation for connecting assembly elements to a component according to one of the preceding claims **characterised in that** the assembly carrier (12) is movable into a working station (15) and into the operative region of at least one assembly tool (18) arranged in the working station (15).

7. Assembly automation for connecting assembly elements to a component according to one of the preceding claims **characterised in that** one or more assembly carriers (12) are integrated into a circulating assembly carousel (4, 5) and are guided in the assembly carousel (4, 5) radially displaceably by way of carrier arms (11) and/or rotatably about the longitudinal axis (14) of the carrier arms (11).

8. Assembly automation for connecting assembly elements to a component according to one of the preceding claims **characterised in that** the position of the component (8) can be altered in relation to the at least one assembly tool (18) and the change in the position of the component (18) is effected by a change in position of the respective assembly carrier (12) and/or by transposition of the component (8) by means of the assembly robot (2) in the respective assembly carrier (12).

9. Assembly automation for connecting assembly elements to a component according to one of the preceding claims **characterised in that** one or more assembly carousels (4, 5) are associated with an assembly robot (2) and the assembly robot (2) feeds the components to the assembly carriers (12).

10. Assembly automation for connecting assembly elements to a component according to one of the preceding claims **characterised in that** the at least one assembly tool (18) is in the form of a press-in spindle (19).

11. Assembly automation for connecting assembly elements to a component according to one of the preceding claims **characterised in that** a plurality of assembly tools (18) are associated with the assembly carrier (12) in a working station (15).

12. Assembly automation for connecting assembly elements to a component according to one of the preceding claims **characterised in that** the assembly elements (21) are in the form of bearing bushes (34).

13. Assembly automation for connecting assembly elements to a component according to claim 12 **characterised in that** the bearing bushes (34) are in the form of joint bearing bushes and/or rubber bearing bushes.

14. Assembly automation for connecting assembly elements to a component according to one of the preceding claims **characterised in that** the component (8) receiving at least one assembly element (21) is in the form of an axle carrier (35) for vehicle axles.

## Revendications

1. Automatisme de montage pour l'assemblage d'éléments de montage (21) avec un composant (8), le composant (8) pouvant être amené par un robot de montage (2) dans la zone d'action d'un support de montage (12) qui immobilise le composant (8) dans au moins une position de montage dans la zone d'action d'un outil de montage (18), **caractérisé en ce que** le support de montage (12) comprend au moins un logement d'élément de montage (26) et le logement d'élément de montage (26) est disposé de manière interchangeable sur le support de montage (12).

2. Automatisme de montage pour l'assemblage d'éléments de montage avec un composant selon la revendication 1, **caractérisé en ce que** le logement d'élément de montage (26) immobilise l'élément de montage (21) dans la position de montage.

3. Automatisme de montage pour l'assemblage d'éléments de montage avec un composant selon une des revendications précédentes, **caractérisé en ce qu'**un logement de composant (23, 30, 36) est associé au moins partiellement au support de montage, et le logement de composant (23, 30, 36) et/ou le robot de montage (2, 7) immobilise le composant (8) dans la position de montage.

4. Automatisme de montage pour l'assemblage d'éléments de montage avec un composant selon la revendication 3, **caractérisé en ce que** le logement de composant (23, 30, 36) et le logement d'élément de montage (26) sont disposés de manière interchangeable sur le support de montage (12).

5. Automatisme de montage pour l'assemblage d'éléments de montage avec un composant selon une des revendications 3 ou 4, **caractérisé en ce que** le logement d'élément de montage (26) et le logement de composant (36) sont réalisés d'un seul tenant et forment un dispositif de fixation (33), le dispositif de fixation (33) étant intégré de manière interchangeable dans le support de montage (12).

6. Automatisme de montage pour l'assemblage d'éléments de montage avec un composant selon une des revendications précédentes, **caractérisé en ce que** le support de montage (12) est déplaçable jusqu'à un poste de travail (15) et jusque dans la zone d'action d'au moins un outil de montage (18) disposé sur le poste de travail (15).

7. Automatisme de montage pour l'assemblage d'éléments de montage avec un composant selon une des revendications précédentes, **caractérisé en ce qu'**un ou plusieurs supports de montage (12) sont intégrés dans un carrousel de montage tournant (4, 5) et sont guidés en translation radiale au moyen de bras porteurs (11) et/ou en rotation autour de l'axe longitudinal (14) des bras porteurs (11) dans le carrousel de montage (4, 5).

8. Automatisme de montage pour l'assemblage d'éléments de montage avec un composant selon une des revendications précédentes, **caractérisé en ce que** la position du composant (8) par rapport audit au moins un outil de montage (18) peut être changée et le changement de position du composant (18) est réalisé par un changement de position du support de montage (12) respectif et/ou par déplacement du composant (8) au moyen du robot de montage (2) dans le support de montage (12) respectif.

9. Automatisme de montage pour l'assemblage d'éléments de montage avec un composant selon une des revendications précédentes, **caractérisé en ce qu'**un ou plusieurs carrousels de montage (4, 5) sont associés à un robot de montage (2), et le robot de montage (2) amène les composants (8) aux supports de montage (12).

10. Automatisme de montage pour l'assemblage d'éléments de montage avec un composant selon une des revendications précédentes, **caractérisé en ce que** ledit au moins un outil de montage (18) est réalisé sous la forme d'une broche à sertir (19).

11. Automatisme de montage pour l'assemblage d'éléments de montage selon une des revendications précédentes, **caractérisé en ce qu'**une pluralité d'outils de montage (18) est associée au support de montage (12) sur un poste de travail (15).

12. Automatisme de montage pour l'assemblage d'éléments de montage avec un composant selon une des revendications précédentes, **caractérisé en ce que** les éléments de montage (21) sont conformés en coussinets (34).

13. Automatisme de montage pour l'assemblage d'éléments de montage avec un composant selon la revendication 12, **caractérisé en ce que** les coussinets (34) sont réalisés sous la forme de coussinets articulés et/ou de coussinets en caoutchouc.

14. Automatisme de montage pour l'assemblage d'éléments de montage avec un composant selon une des revendications précédentes, **caractérisé en ce que** le composant (8) recevant ledit au moins un élément de montage (21) est conformé en support d'essieu (35) pour des essieux de véhicules.
